Europäisches Patentamt

European Patent Office

Office européen des brevets

(19)

(11) Veröffentlichungsnummer: **0 108 413 B1**

(12) **EUROPÄISCHE PATENTSCHRIFT**

(45) Veröffentlichungstag der Patentschrift: **22.01.92**

(51) Int. Cl.⁵: **G06F 13/00**

(21) Anmeldenummer: **83111098.6**

(22) Anmeldetag: **07.11.83**

(54) **Verfahren zum Steuern eines Datentransfers zwischen einem Datensender und einem Datenempfänger über einen Bus mit Hilfe einer am Bus angeschlossenen Steuereinrichtung.**

(30) Priorität: **09.11.82 DE 3241415**

(43) Veröffentlichungstag der Anmeldung:
**16.05.84 Patentblatt 84/20**

(45) Bekanntmachung des Hinweises auf die
Patenterteilung:
**22.01.92 Patentblatt 92/04**

(84) Benannte Vertragsstaaten:
**AT DE FR GB IT**

(56) Entgegenhaltungen:
**EP-A- 0 045 043**

**IBM TECHNICAL DISCLOSURE BULLETIN,
Band 21, Nr. 5, Oktober 1978, Seite 1839, New
York, US; J.T. MOYER: "Common hardware
for byte and block multiplex channels"**

**ELECTRONIC DESIGN, Band 27, Nr. 7, 29.
März 1979, Seiten 102-106, Rochelle, US; D.
STAMM et al.: "Design engineering, semiconductor special report, free the muC's
CPU from I/O hassles with a special I/O processor"**

**WESCON TECHNICAL PAPER, vol. 26, Sep-**
**tember 1982, Kapitel 20/4, Seiten 1-7, Western Periodicals Co., North Hollywood, US;
T.W. CANTRELL: "The HD68450 - A versatile
DMA controller for high performance system
design"**

(73) Patentinhaber: **SIEMENS AKTIENGESELL-
SCHAFT
Wittelsbacherplatz 2
W-8000 München 2(DE)**

(72) Erfinder: **Böning, Werner, Ing. grad.
Washingtonstrasse 17
W-8000 München 19(DE)**

EP 0 108 413 B1

## Beschreibung

Die Erfindung bezieht sich auf ein Verfahren zum Steuern eines Datentransfers zwischen einem Datensender und einem Datenempfänger mittels einer Steuereinrichtung über mindestens einen Kanal, wobei die Steuereinrichtung für die Abarbeitung des Datentransfers Kanalprogramme verwendet, wobei der Datentransfer generell im Selektorbetrieb oder im Multiplexbetrieb gesteuert werden kann und wobei der Datentransfer sowohl im Byte/Wort-Multiplex-Betrieb als auch im Block-Multiplex-Betrieb gesteuert werden kann.

Aus den DE-PS 23 39 813 und 23 39 787 ist es bekannt, daß Datentransfers zwischen einem Datensender, z. B. einem Speicher, und einem Datenempfänger, z. B. einem peripheren Gerät, bei einem Datenverarbeitungssystem mit Hilfe von sog. Kanalprogrammen durchgeführt wird. Die Kanalprogramme geben an, wie der Datentransfer durchzuführen ist, sie geben aber auch an, wie die organisatorischen Abläufe, wie Gerätestart, Gerätezustandsabfrage, Gerätestop, Unterbrechungsanforderung an die Recheneinheit usw. auszuführen sind. Die Kanalprogramme werden im Datenverarbeitungssystem dieser Art mit Hilfe von Kanalwerken durchgeführt, die zum Teil unabhängig von der Recheneinheit des Datenverarbeitungssystems den Datentransfer durchführen.

Die Kanalwerke von derartigen Großrechnern führen den Datentransfer entweder im Selektorbetrieb oder im Byte/Wort-Multiplexbetrieb durch. Die Übertragungseinrichtungen, über die der Datentransfer erfolgt, werden im folgenden Kanäle genannt.

Selektorkanäle sind Hochgeschwindigkeitskanäle, die jeweils zu einer Zeit nur die Bearbeitung eines einzigen Kanalprogramms und damit die Bedienung eines einzigen peripheren Gerätes zulassen. Sind an einen Selektorkanal mehrere Geräte angeschlossen, so kann ein Wechsel von einem peripheren Gerät zu einem anderen erst nach gänzlicher Abarbeitung des ganzen Kanalprogramms, also erst beim nächsten Neustart des Selektorkanals vorgenommen werden. Beim Byte-Multiplexkanal dagegen kann nach jedem Byte-Transfer für ein Gerät ein Wechsel zu einem anderen Gerät vorgenommen werden. Dies setzt voraus, daß für jedes gestartete Gerät am Multiplexkanal auch ein Kanalprogramm vorhanden ist. Bei jeder peripheren Bedienungsanforderung muß der Multiplexkanal in Abhängigkeit z.B. der Gerätenummer oder Unterkanalnummer auf das spezifische Kanalprogramm zusteuern, um de erforderlichen Bearbeitungsparameter zu erhalten. Da bei einem derartigen Verarbeitungssystem eine Vielzahl von einzelnen Geräten bedient werden muß, ist die Anzahl der Kanalprogramme groß, so daß diese im Hauptspeicher oder Systemspeicher abgespeichert werden müssen. Dann aber ist für jeden Bytetransfer die Ansteuerung des Kanalprogramms im Systemspeicher notwendig, mit der Folge, daß der Byte-Muliplexkanal mit keinen hohen Transferraten arbeitet.

Es ist nun weiterhin bekannt, die Datenübertragung im Blockmultiplexbetrieb durchzuführen. Ein Blockmultiplexkanal ist überall besonders vorteilhaft, wo an einem Kanal mehrere periphere Einheiten oder Geräte angeschlossen werden und bei den Geräten Wartezeiten eintreten können, nach denen aber der Datentransfer mit hoher Geschwindigkeit erfolgen muß. Beispiele für solche Geräte sind z.B. Plattenspeichergeräte oder Geräte, die mit einem Pufferspeicher ausgerüstet sind, in welchem die zu übertragenden Daten zunächst gesammelt werden, bevor sie übertragen werden. Der Vorteil des Blockmultiplexbetriebs besteht darin, daß die Wartezeiten der peripheren Geräte dazu verwendet werden können, Datentransfers zu anderen oder von anderen Geräten auszuführen. Wie die Datenübertragung im Blockmultiplexbetrieb auszuführen ist, ergibt sich aus den oben angegebenen deutschen Patentschriften.

Weiterhin sind bereits Steuerungen vorgeschlagen worden, die eine Umschaltung zwischen Selektorbetrieb, Byte-Multiplexbetrieb und Block-Multiplexbetrieb erlauben. So ist etwa aus der europäischen Offenlegungsschrift EP-A 0 045 043 ein Hinweis auf eine Gerätesteuerung zu entnehmen, die eine Umschaltung vom Selektorbetrieb auf den Multiplexbetrieb über ein setz- und löschbares Steuerbit in einem Multiplex-Modus-Register auslöst. Im "IBM Technical Disclosure Bulletin", Bd. 21, Nr. 5, Oktober 1978, S. 1839 ist andererseits die Möglichkeit aufgezeigt, durch Zufügen einiger weniger Schaltkreise und eines zusätzlichen Mikrocodes einen Blockmultiplexkanal zu einem Bytemultiplexkanal zu erweitern. Beim Multiplexbetrieb erreicht diese Lösung jedoch nicht die maximal mögliche Transferrate.

Die Steuerung des Datentransfers zwischen einem Datensender und einem Datenempfänger kann auch mit Hilfe von Mikrocomputersystemen erfolgen. Solche Mikrocomputersysteme enthalten in der Regel einen Mikrocomputer, einen Speicher und periphere Geräte, die entweder direkt oder über Zwischeneinheiten mit einem Bus verbunden sind. Über den Bus erfolgt dann die Übertragung der Adressen, der Daten und der Steuersignale. Die Steuerung des Datentransfers z. B. zwischen dem Speicher und einem peripheren Gerät wird vom Mikrocomputer in Abhängigkeit des sog. Kanalprogramms gesteuert. Um den Mikrocomputer von der Steuerung zu entlasten, ist es bekannt, zusätzlich an den Bus z. B. eine DMA Steuerung anzuschließen, die den Datentransfer unabhängig vom Mikrocomputer steuert. Während die DMA Steuerung den Datentransfer durchführt, kann dann der Mikrocomputer andere Aufgaben erledigen. Ein derartiges System ergibt sich z. B. aus "Elektronik Praxis", Nr. 9, Sept. 1982, S. 131-134.

Die der Erfindung zugrundeliegende Aufgabe besteht darin, eine Steuereinrichtung und ein Verfahren anzugeben, bei denen der Datentransfer zwischen einem Datensender und einem Datenempfänger wahlweise im Selektorbetrieb oder im Multiplexbetrieb durchgeführt werden kann, wobei in der Multiplex-Betriebsart für jeden Kanal oder Subkanal beliebig zwischen Byte-Multiplex- und Block-Multiplex-Betrieb gewählt werden kann.

Die Aufgabe wird bei einer Steuereinrichtung der eingangs genannten Art und dem damit arbeitendem Verfahren durch die kennzeichnenden Teile der Patentansprüche 1 bzw. 4 gelöst.

Ob der Kanal im Block-Multiplex-Betrieb oder Byte-Multiplex-Betrieb arbeitet, wird mit Hilfe des im Kanalprogramm enthaltenen Transferbefehls festgelegt. Da somit mit dem Kanal sowohl im Byte-Multiplex-Betrieb als auch im Block-Multiplex-Betrieb gearbeitet werden kann, ist es zweckmäßig, die Abarbeitung des entsprechenden Transferbefehls bei beiden Betriebsarten möglichst identisch zu gestalten. Identisch ist die organisatorische Bearbeitung eines Transferbefehls in beiden Betriebsarten in folgenden Schritten:
Starten eines Gerätes oder Unterkanals, an dem das Gerät angeschlossen ist, dabei kann die Startoperation zwischen zwei Datentransfers anderer Unterkanäle eingeschoben werden. Anschließend geht der neu aktivierte Unterkanal in Warteposition. Trifft nun an der Steuereinrichtung eine Geräteanforderung des neu gestarteten Gerätes ein, so wird im Gegensatz zum Byte-Multiplex-Betrieb, bei dem nur ein einziges Byte übertragen wird und anschließend wieder der Wartezustand eingenommen wird, beim Block-Multiplex-Betrieb der gesamte Blocktransfer ausgeführt. Das heißt, auf eine einzige Bedienungsanforderung erfolgt ein ganzer Blocktransfer.
Wie beim Byte-Multiplexkanal oder Selektorkanal erfolgt nach dem Übertragen des letzten Datums des Blockes automatisch eine Befehlskettung, so daß der nächste Kanalbefehl im Kanalprogramm bearbeitet wird. Der nächste Kanalbefehl kann dabei ein Steuerbefehl oder wiederum ein Transferbefehl sein.

Wie beim Byte-Multiplexkanal, so wird auch am Block-Multiplexkanal der Wartezustand des Unterkanals wieder eingenommen, sobald bei der Befehlskettung im Kanalprogramm ein Transferbefehl erkannt wird. Erst eine erneute Bedienungsanforderung des gestarteten Gerätes initiiert den nächsten Blocktransfer.

Wartezeiten zwischen dem Starten des Gerätes und der ersten Bedienungsanforderung können jederzeit zur Bearbeitung von Bedienungsanforderungen anderer Unterkanäle ausgenutzt werden.

Jede Anforderungsbearbeitung beginnt mit der Abfrage der Adresse des Datenempfängers, z.B. der Abfrage der Gerätenummer oder der Nummer des Unterkanals. Mit dieser Adresse wird dann z.B. über eine Tabelle im Speicher auf das spezifische Kanalprogramm zugegriffen.

Andere Weiterbildungen der Erfindung ergeben sich aus den Unteransprüchen.

An Hand eines Ausführungsbeispiels, das in den Figuren dargestellt ist, wird die Erfindung weiter erläutert. Es zeigen

Figur 1     ein Blockschaltbild eines Mikrocomputersystems mit einer DMA Steuerung,
Figur 2     den Aufbau der DMA Steuerung,
Figur 3     eine ausführlichere Darstellung eines Teils der DMA Steuerung,
Figur 4     den Aufbau eines Modusregisters,
Figur 5     der Aufbau eines Transferbefehls,
Figur 6     den Aufbau eines Befehlsregisters,
Figur 7     ein Ablaufdiagramm, in dem die einzelnen Bearbeitungsschritte bei einem Blockmultiplexkanal dargestellt sind.

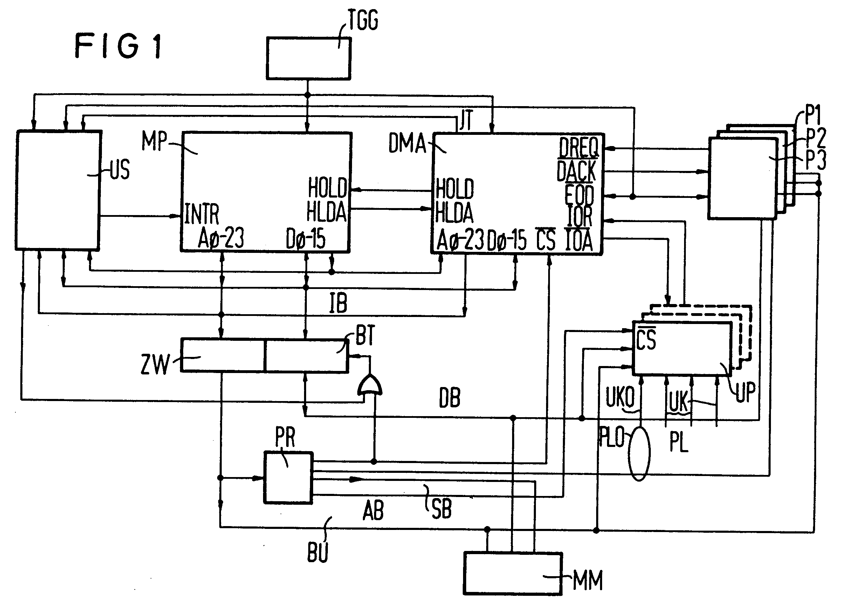

Figur 1 zeigt einen möglichen Aufbau eines Mikrocomputersystems mit einer DMA Steuerung. Der Mikroprosessor MP und die DMA Steuerung DMA ist über einen internen Bus IB zur Übertragung von Daten, Adressen und Steuersignale miteinander verbunden. Dem Mikroprozessor MP ist eine Unterbrechungssteuerung US zugeordnet, die Unterbrechungsanforderungen IT von der Steuerung DMA bzw. von anderen Stellen des Mikrocomputersystems in aufbereiteter Form dem Mikroprozessor MP zuführt. Der interne Bus IB ist über Zwischenspeicher ZW, Bustreiber BT mit einem externen BU verbunden, der aus einem Adreßbus AD, einem Datenbus DB und einem Steuerbus SB besteht. An dem externen Bus BU sind ein Speicher MM, externe Geräte P1, P2 und P3 angeschlossen. Zu dem liegt am externen Bus BU eine Unterbrechungs- und Prioritätssteuerung UP, von der aus Unterkanäle UK zu langsamen peripheren Geräten PL führen. Der zum Betrieb des Mikrocomputersystems erforderliche Takt wird durch einen Taktgenerator TGG abgegeben.

Die Ansteuerung der einzelnen Einheiten des Mikrocomputersystems durch den Mikroprozessor MP erfolgt über den Steuerbus SB, bei den ausgehend von Adressen der anzusteuernden Einheiten durch einen PROM-Baustein PRO das entsprechende Auswahlsignal erzeugt wird. Der Zugriff zum Bus zwischen dem Mikrocomputer MP und der Steuerung DMA wird durch die Signale HOLD und HLDA festgelegt. Der Datentransfer zwischen z.B. dem Speicher MM und den peripheren Geräten P1 bis P3 wird durch die Steuerung DMA gesteuert und zwar mit Hilfe von Bedienungsanforderungen DREQ von den peripheren Geräten und Quittungssignalen DACK von der Steuerung DMA. Unterbrechungsanforderungen zwischen den peripheren Geräten P1 und P3 und der Steuerung DMA werden über Signale EOD ausgetauscht. Die Geräte P1 bis P3 sind schnelle Geräte und der Datentransfer zwischen diesen peripheren Geräten und z.B. dem Speicher MM erfolgt im Selektorbetrieb.

Die Unterbrechungssteuerung UP, mit der die langsamen peripheren Geräte PL über Unterkanäle UK verbunden sind, arbeitet mit der Steuerung DMA mit Hilfe von Bedienungsanforderungen IOR und Quittungssignalen IOA auf die Bedienungsanforderungen zusammen. Wenn mehrere periphere Geräte PL über mehrere Unterkanäle UK Bedienungsanforderungen stellen, dann wählt die Unterbrechungssteuerung UP entsprechend den Prioritäten der peripheren Geräte PL das höchstpriore periphere Gerät aus und gibt dessen Bedienungsanforderung an die Steuerung DMA. Diese quittiert die Bedienungsanforderung und leitet den gewünschten Datentransfer zwischen dem peripheren Gerät und z.B. dem Speicher MM ein. Da die Geräte PL langsame Geräte sind, kann der Datentransfer zwischen ihnen und dem Datenempfänger bzw. Datensender im Multiplexbetrieb erfolgen.

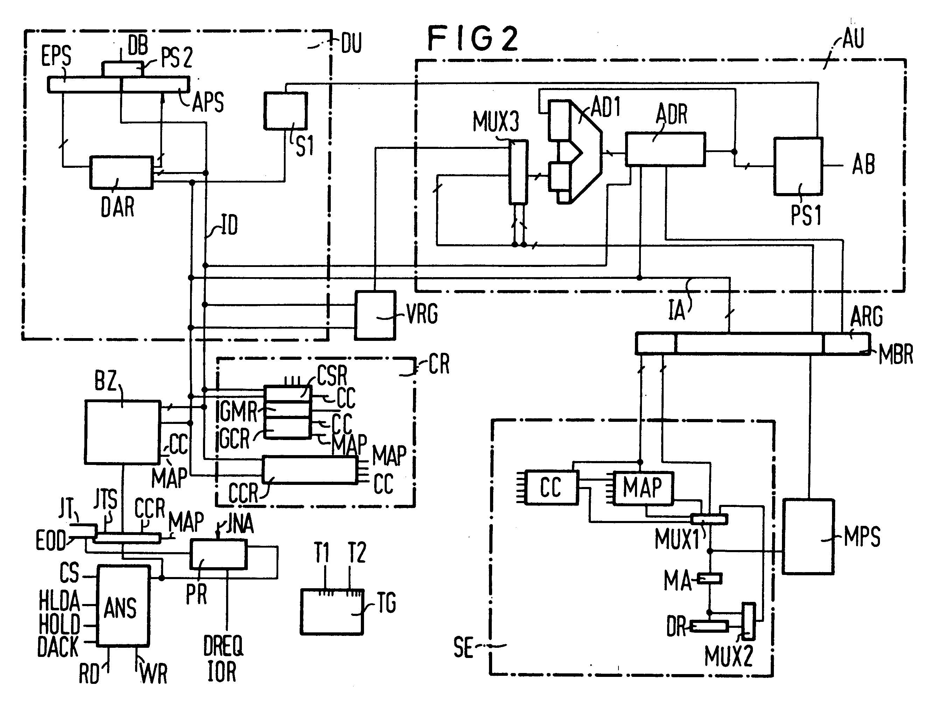

Die in Figur 1 gezeigten Einheiten sind alles handelsübliche Bausteine bis auf die Steuerung DMA, die in Figur 2 ausführlicher dargestellt ist.

Die in Figur 2 gezeigte DMA Steuerung enthält zunächst einen Sequencer SE bekannten Aufbaus. Dieser besteht aus einem Bedingungsmultiplexer CC, einem Befehlsdecoder MAP, einem ersten Multiplexer MUX1, einem Mikroadressenregister MA, einem Adreßaddierer DR und einem zweiten Multiplexer MUX2. Der Sequencer SE erzeugt aus einem Kanalbefehl mit Hilfe des Befehlsdecoders MAP die Startadresse des Mikroprogramms, das zur Ausführung des Kanalbefehls erforderlich ist. Diese Mikroprogramme stehen im Mikroprogrammspeicher MPS. Der Mikroprogrammspeicher MPS ist mit einem Mikrobefehlsregister MBR verbunden, in den die ausgegebenen Mikrobefehle aufgenommen werden. Von dort aus gehen dann die einzelnen Leitungen für Steuersignale und Adressen zu den übrigen Einheiten der DMA Steuerung. Das Mikrobefehlsregister MBR ist z.B. auch mit dem Sequencer SE verbunden, um aus dem vorhergehenden Mikrobefehl die Adresse des nächst zu bearbeitenden Mikrobefehls entwickeln zu können. Der Aufbau eines Sequencers SE und das Zusammenspiel mit den genannten Einheiten ergibt sich z.B. aus der oben angegebenen Literaturstelle "Elektronik Praxis".

Eine weitere Einheit der DMA Steuerung ist die Adresseneinheit AU. Diese enthält Adressenregister ADR für den abzuarbeitenden Kanalbefehl, für den Datensender und Datenempfänger Da die Inhalte, also die Adressen der Adressenregister ADR verändert werden müssen, enthält die Adresseneinheit AU weiterhin einen Addierer AD, in dem zu der in den Adressenregistern enthaltenen Inhalten z.B. vom Mikrobefehlsregister MBR oder von anderen Einheiten der DMA Steuerung gelieferte Größen hinzuaddiert werden können. Die Adressen der Adressenregister ADR können in einem Pufferspeicher PS zwischengespeichert werden und dann auf den Adreßbus AB ausgegeben werden. Die einzelnen Größen, die zu den Adressen im Addierer AD hinzuaddiert werden, werden über einen dritten Mulitplexer MUX$^3$dem Addierer AD zugeführt.

Die DMA Steuerung enthält weiterhin eine Dateneinheit DU. Die Dateneinheit DU ist mit dem Datenbus DB verbunden. Die Dateneinheit DU enthält einen Zwischenspeicher PS2, ein Eingangsregister EPS und ein Ausgangsregister APS und einen Pufferspeicher DAR. Der Pufferspeicher DAR liegt zwischen dem Eingangsregister EPS und dem Ausgangsregister APS und er dient dazu, die zu übertragenden Daten in der DMA Steuerung zwischenspeichernzu können.

Die in der DMA Steuerung abzuarbeitenden Befehle und der Status der Kanäle sind in Registern des Steuerregistersatzes CR abgespeichert. Der Registersatz CR enthält ein Kanalbefehlsregister CCR zur Aufnahme des zu bearbeitenden Kanalbefehls, ein Modusregister GMR, ein Befehlsregister GCR zur Aufnahme des Startbefehls und ein Statusregister CSR zur Übernahme des Kanalstatus nach Beendigung einer Transferoperation. Die Register CR sind mit dem Sequencer SE in der in Figur 2 angegebenen Weise verbunden.

Mit Hilfe eines Bytezählers BZ stellt die DMA Steuerung fest, wieviel Byte bei einer Transferoperation übertragen worden sind. In Abhängigkeit der Anzahl der übertragenen Byte kann die Transferoperation beendet werden. Aus diesem Grunde ist der Bytezähler BZ auch mit dem Sequencer SE verbunden. Er ist ebenfalls mit einer Schaltungsanordnung ITS zur Erzeugung von Unterbrechungsanforderungen IT und EOD verbunden.

Schließlich enthält die DMA Steuerung noch eine Prioritätslogik PR, eine Anpassungsschaltung ANS zur Anpassung der von der DMA Steuerung erzeugten und entgegengenommenen Signale an den Mikroprozessor MP bzw. an die Peripherie und einen Taktgenerator TG.

Die einzelnen Einheiten der DMA Steuerung sind über einen internen Datenbus ID und einen internen Adreß- und Steuerbus IA miteinander verbunden. Über einen Schalter S1 kann der externe Adreßbus AB mit dem internen Adreßbus IA verbunden werden. Dies ist erforderlich, um die DMA-Register zum Laden und Lesen vom Mikroprozessor MP aus adressieren zu können (z.B. Laden des Startbefehls in das Befehlsregister GCR).

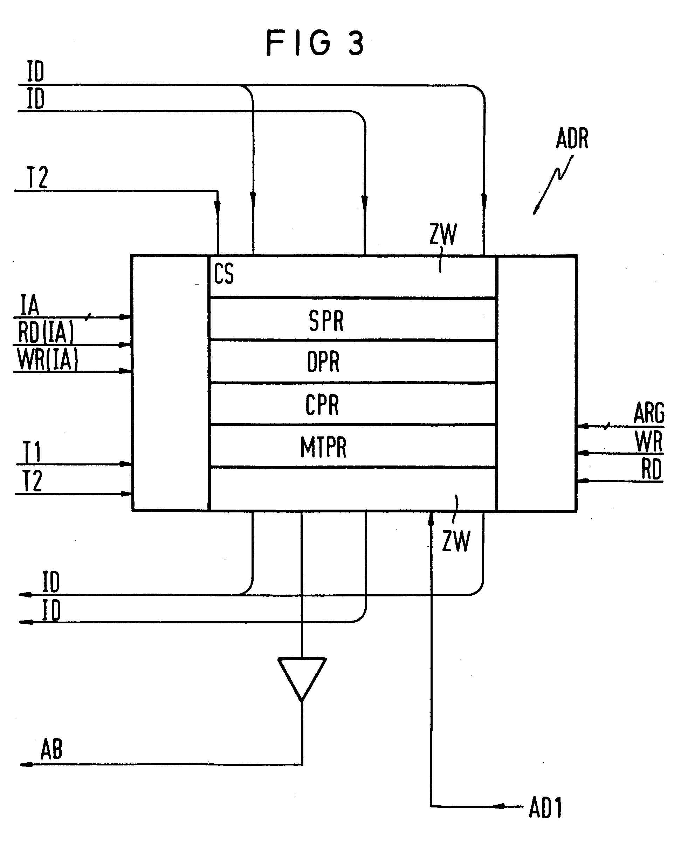

Aus Figur 3 ergibt sich der Aufbau des Adressenregisters ADR in der Adresseneinheit AU. Im Adressenregistersatz ADR ist ein Adressenregister CPR zur Aufnahme der Adresse des Kanalbefehls, ein Adressenregister SPR zur Aufnahme der Adresse des Datensenders, ein Adressenregister DPR zur Aufnahme der Adresse des Datenempfängers und ein Adressenregister MTPR zur Aufnahme eines Adreßteils der einem Unterkanal zugeordneten Startadresse für dessen Kanalprogramm enthalten. Den Adressenregistern ist ein Eingangszwischenregister ZW vorgeschaltet.

Die Ansteuerung der Adressenregister zum Schreiben oder zum Lesen erfolgt über Steuersignale vom internen Adreßbus IA in Abhängigkeit von Taktsignalen T1 und T2 vom Taktgenerator TG. Die Adresse des zu beschreibenden oder zu lesenden Adreßregisters wird dem Mikrobefehlsregister MBR entnommen und an den Registersatz ADR angelegt. Sie ist in Figur 2 und Figur 3 ARG bezeichnet.

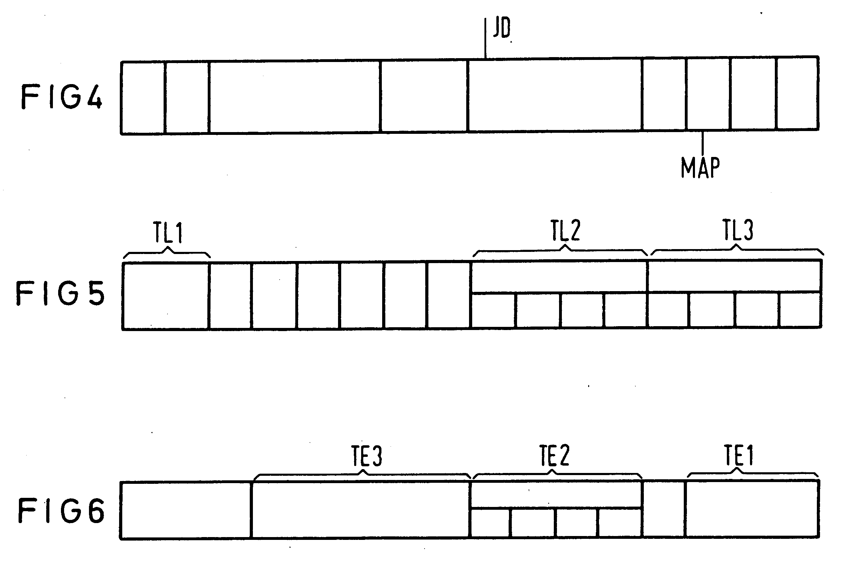

Soll der Datentransfer zwischen dem Datensender und dem Datenempfänger im Multiplexbetrieb durchgeführt werden, also über die Unterbrechungssteuerung UP in Figur 1, dann wird dies der DMA Steuerung vom Mikroprozessor MP mitgeteilt. Dazu wird in das Modusregister GMR der DMA Steuerung ein Moduswort eingespeichert, bei dem ein Bit zur Kennzeichnung der Betriebsart enthalten ist. Durch dieses Bit wird die entsprechende Registerstelle im Modusregister GMR eingestellt. Ist dieses Bit z.B. logisch 0, dann wird im Selektorbetrieb gearbeitet, ist es logisch 1, dann wird im Multiplexbetrieb gearbeitet. In Figur 4 ist das Register GMR dargestellt und gezeigt, daß z.B. die dritte Registerstelle darüber entscheidet, in welcher Betriebsart die Datenübertragung erfolgt. Die übrigen Teile des Modusregisters GMR sind zur Erläuterung der Betriebsart der Datenübertragung nicht erforderlich und sind darum nicht dargestellt.

Die Entscheidung darüber, ob der Multiplexbetrieb ein Bytemultiplexbetrieb oder ein Blockmultiplexbetrieb sein soll, trifft der Transferbefehl, der im Kanalbefehlsregister CCR abgespeichert wird. Der Aufbau eines derartigen Transferbefehls zeigt Figur 5. Auch hier sind nur die Teile des Transferbefehls dargestellt, die zur Erläuterung der Betriebsart der Datenübertragung erforderlich sind. Mit Hilfe des Bestandteils TL1 im Transferbefehl wird festgelegt, ob im Bytemultiplexbetrieb oder im Blockmultiplexbetrieb gearbeitet wird. Ist z.B. der Teil TL1 logisch 01, dann wird im Bytemultiplexbetrieb gearbeitet, ist er z.B. logisch 11, dann wird im Blockmultiplexbetrieb gearbeitet. Mit Hilfe des Teils TL1 kann außerdem codiert werden, ob der Befehl ein Transferbefehl ist oder ein Steuerbefehl. Der Teil TL2 des Transferbefehls gibt an, ob die Übertragung der Daten wortweise oder byteweise erfolgt, in welcher Richtung der Datentransfer durchgeführt wird und ob die Adresse des Datenempfängers erhöht oder erniedrigt wird. Entsprechend gibt der Teil TL3 des Befehls an, ob die Adresse des Datensenders erhöht oder erniedrigt wird.

Aus Figur 6 ergibt sich der Aufbau des Startbefehls, der in das Befehlsregister GCR eingespeichert wird und mit dem ein bestimmtes Gerät gestartet oder gestoppt wird. In einem Teil TE1 des Befehlsregisters GCR ist der auszuführende Befehl angegeben, z.B. der Startbefehl oder der Stoppbefehl, in einem Teil TE2 ist der Kanal angegeben, über den der Datentransfer durchzuführen ist, in einem Teil TE3 ist die Adresse des Unterkanals angegeben, über die beim Multiplexbetrieb der Datentransfer erfolgen soll.

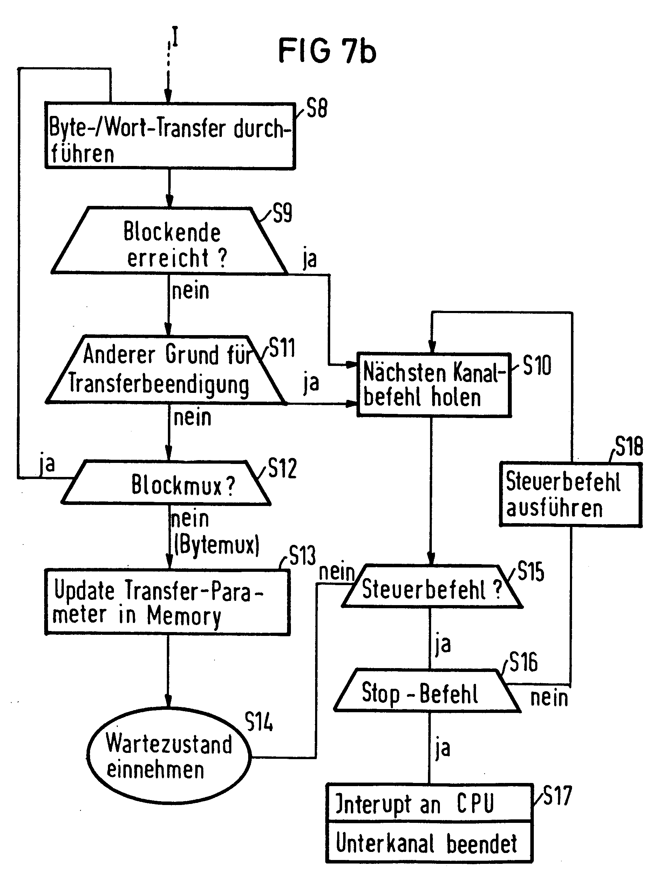

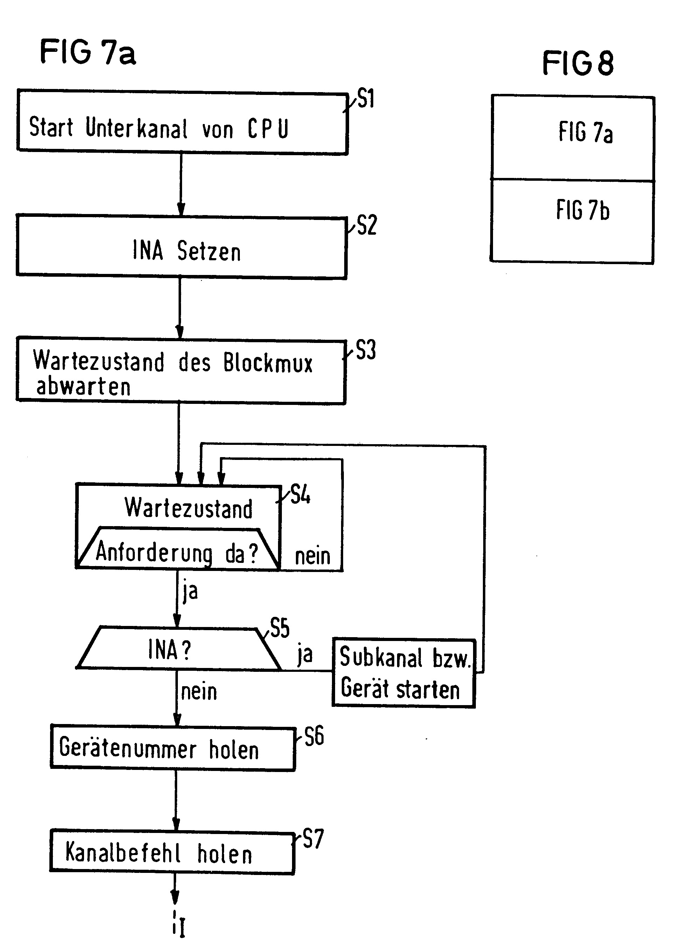

Im folgenden wird in Verbindung mit dem Ablaufdiagramm der Figur 7 beschrieben, wie der Multiplexbetrieb bei der Datenübertragung z.B. zwischen dem Speicher MM und dem peripheren Gerät PLO über den Unterkanal UKO nach Figur 1 durchgeführt wird. Vor dem ersten Datentransfer muß die DMA-Steuerung initialisiert werden. Dazu gehört das Laden des Modusregisters GMR und des Adreßregisters ADR durch den Mikroprozessor MP. Vor der Ausführung des Datentransfers hinterlegt der Mikroprozessor MP auch das zugehörige Kanalprogramm im Speicher MM. Nach dieser Vorarbeit trägt der Mikroprozessor MP den Startbefehl für den Unterkanal UKO in das Befehlsregister GCR der DMA-Steuerung ein. Dies ist der Schritt S1 in Figur 7.

Im Schritt S2 übernimmt die DMA-Steuerung nach Figur 2 die weitere Bearbeitung des Startbefehls. Aus dem Inhalt des Modusregisters GMR kann die DMA Steuerung entnehmen, daß die Datenübertragung im Multiplexbetrieb erfolgen soll.

Entsprechend setzt die DMA Steuerung eine interne Anforderung INA, siehe Schritt S2. Der Startbefehl kann erst dann zur Ausführung kommen, wenn der Multiplexkanal eine gerade laufende Bearbeitung beendet hat,also den Wartezustand eingenommen hat. Erst dann wird auf Grund der internen Anforderung INA die Startbearbeitung aufgenommen ( Schritt S3,S4 und S5). Die Adresse des anzusteuernden peripheren Gerätes PLO ergibt sich aus dem Inhalt des Befehlsregisters GCR. Dort ist die Adresse des entsprechenden Unterkanals UKO im Teil TE3 enthalten, außerdem im Teil TE1 angegeben, daß der Unterkanal UKO bzw. das daran angeschlossene Gerät PLO gestartet werden soll. Die DMA Steuerung gibt dementsprechend eine Aufforderung an den Unterkanal UKO bzw. das periphere Gerät PLO, die Datenübertragung zu beginnen und geht dann in einem Schritt S4 der Figur 7 wieder in den Wartezustand über. Dieser Wartezustand wird dann beendet, wenn eine Bedienungsanforderung vom peripheren Gerät PLO bei der DMA Steuerung eintrifft. Diese Überprüfung wird ebenfalls in Schritt S4 in Figur 7 dargestellt. Der Wartezustand bleibt solange erhalten, bis eine Bedienungsaufforderung von dem aufgeforderten Gerät eintrifft. Während des Wartezustandes können jedoch Bedienungsanforderungen von anderen Geräten bearbeitet werden bzw. andere Geräte über den Multiplexkanal gestartet werden. Trifft vom peripheren Gerät PLO die Bedienungsanforderung ein, dann wird in einem Schritt S5 festgestellt, ob nicht höherpriore Anforderungen von anderen Geräten zunächst zu bearbeiten sind (Schritt S5). Ist dies nicht der Fall, dann wird in einem Schritt S6 die Adresse des anfordernden Gerätes geholt und diese Adresse in einem Gerätenummernregister VRG zwischengespeichert. Mit Hilfe dieser Gerätenummer aus dem Gerätenummernregister VRG und dem Inhalt des Adressenregisters MTPR kann die Adresse des ersten zu bearbeitenden Kanalbefehls im Speicher MM berechnet werden. Dies erfolgt mit Hilfe des Addierers AD, dem über den Multiplexer MUX3 die Gerätenummer und der Inhalt des Registers MTPR zugeführt wird. Die neuberechnete Adresse wird dann über den Adreßbus AB ausgegeben und unter dieser Adresse der erste Kanalbefehl in das Kanalsbefehlsregister CCR eingespeichert (Schritt S7). Entsprechend dem Kanalbefehl wird die erste Datenübertragung eines Bytes oder Wortes durchgeführt (Schritt S8) und anschließend überprüft, ob die Datenübertragung beendet ist (Schritt S9). Dies erfolgt mit Hilfe des Bytezählers BZ, der von der DMA Steuerung aus dem Kanalbefehl geladen worden ist und der die Anzahl der zu übertragenden Bytes oder Worte angibt. Sind alle Daten für diesen Datentransferbefehl übertragen worden, dann ist dieser Kanalbefehl abgearbeitet worden und der nächste Kanalbefehl wird in einem Schritt S10 aus dem Speicher MM geholt. Ist dagegen die Datenübertragung, die durch einen Transferbefehl durchgeführt werden soll, noch nicht beendet, wird in einem Schritt S11 abgefragt, ob ein anderer Grund zur Beendigung der Datenübertragung vorliegt, z.B. eine Unterbrechungsanforderung des peripheren Geräts vorliegt. Ist dies nicht der Fall, dann wird anhand des Kanalbefehls im Kanalbefehlsregister CCR festgestellt, ob Blockmultiplexbetrieb vorliegt oder nicht (Schritt S12). Liegt Blockmultiplexbetrieb vor, dann wird mit dem Schritt S8 fortgefahren. Liegt dagegen ein Bytemultiplexbetrieb vor, dann wird in einem Schritt S13 der Übertragungsvorgang unterbrochen und im Schritt S14 wieder in den Wartezustand übergegangen. Beim Bytemultiplexbetrieb wird dann mit Schritt S4 fortgefahren.

Ist im Schritt S10 der nächste Kanalbefehl geholt worden, dann wird überprüft, ob dieser ein Steuerbefehl ist (Schritt S15). Ist der Befehl ein Transferbefehl, dann wird mit dem Schritt S14 fortgefahren; liegt aber ein Steuerbefehl vor, so wird überprüft (Schritt S16), ob es ein Stopbefehl ist. Ist dies der Fall, wird die Bearbeitung des Kanalprogramms beendet und ein Interrupt IT an den Mikroprozessor MP gegeben (Schritt S17). Liegt kein Stopbefehl vor, dann wird der Steuerbefehl ausgeführt (Schritt S18) und mit dem Schritt S10 fortgefahren.

Die einzelnen, geschilderten Schritte werden durch Mikrobefehle veranlaßt, die im Mikroprogrammspeicher MPS gespeichert sind. Der Sequencer SE erzeugt in Abhängigkeit des Kanalbefehls im Kanalbefehlsregister CCR und in Abgängigkeit des Inhalts des Modusregisters GMR durch den Befehlsdecoder MAP die Startadresse für das Mikroprogramm, das dem Kanalbefehlswort zugeordnet ist. Das dem Kanalbefehl zugeordnete Mikroprogramm läuft dann unter Steuerung durch den Sequencer ab und die dabei vom Mikroprogrammspeicher MPS abgegebenen Mikrobefehle steuern die DMA Steuerung und den Datentransfer in der oben geschilderten Weise.

Ein besonderer Vorteil der Erfindung besteht darin, daß durch die DMA Steuerung der Datentransfer im Blockmultiplexbetrieb oder im Bytemultiplexbetrieb durchgeführt werden kann, ohne daß große Änderungen in der DMA Steuerung erforderlich sind. Die gesamte Befehlseinleitung und Befehlsdurchführung sind beim Blockmultiplex und Bytemultiplex identisch bis auf die Durchführung des Datentransfers, der beim Bytemultiplexbetrieb nur in einem Byte besteht, während beim Blockmultiplexbetrieb ein ganzer Datenblock übertragen wird.

## Patentansprüche

1. Verfahren zum Steuern des Datentranfers zwischen einem Sender (PL; MM) und einem Empfänger (MM; PL) mittels einer Steuereinrichtung (DMA) über mindestens einen Kanal, wobei die Steuereinrichtung (DMA) für die Abarbeitung des Datentransfers Kanalprogramme verwendet, wobei der Datentransfer generell im Selektorbetrieb oder im Multiplexbetrieb gesteuert werden kann, wobei der Datentransfer sowohl im Byte/Word-Multiplex-Betrieb als auch im Block-Multiplex-Betrieb gesteuert werden kann, **dadurch gekennzeichnet,** daß bei Steuerung des Datentransfers im Multiplexbetrieb zwischen Byte/Wort-Multiplex-Betrieb und Block-Multiplex-Betrieb beliebig gewählt werden kann, wobei die gewählte Multiplex-Betriebsart durch den jeweils aktuellen Transferbefehl im Kanalprogramm festgelegt ist.

2. Verfahren nach Anspruch 1, **dadurch gekennzeichnet,** daß der im Multiplex-Betrieb betriebene Kanal mehrere Unterkanäle (UK) aufweist, daß jeder der Unterkanäle (UK) ein eigenes Kanalprogramm verarbeiten kann und daß für verschiedene Unterkanäle (UK) unterschiedliche Multiplex-Betriebsarten gewählt werden können.

3. Verfahren nach einem der vorangehenden Ansprüche, **dadurch gekennzeichnet,** daß zu Beginn des Datentransfers durch einen am Bus angeschlossenen Mikroprozessor (MP) das Modusregister (GMR) und ein erstes Adressenregister (MTPR) mit der Teiladresse des peripheren Gerätes geladen wird, daß anschließend durch den Mikroprozessor (MP) das Befehlsregister (GCR) mit dem Startbefehl für einen Unterkanal geladen wird, daß die Adresse des Unterkanals bzw. die Gerätenummer aus dem Startbefehl entnommen und mit der Teiladresse im Adressenregister (MTPR) verknüpft, der Datenempfänger/sender adressiert und zur Abgabe einer Bedienungsanforderung aufgefordert wird und daß dann die Steuereinrichtung in den Wartezustand übergeht, daß nach Eingang der Bedienungsanforderung vom Datenempfänger/sender unter Abgabe seiner Adresse der erste Befehl des Kanalprogramms unter Verwendung dieser Adresse und der Teiladresse adressiert wird und in das Kanalbefehlsregister (CCR) eingespeichert wird, daß in ein zweites und drittes Adressenregister (SPR) und (DPR) die Adressen des Datensenders und Datenempfängers eingespeichert werden, daß der Bytezähler (BZ) mit der Anzahl der zu übertragenden Bytes geladen wird und daß dann im Block-Muliplex-Betrieb der Datentransfer solange durchgeführt wird, bis der Bytezähler 0 ist, bzw. im Byte/Word-Multiplex-Betrieb nur ein Byte/Word übertragen wird.

4. Steuereinrichtung zum Datentransfer über einen Bus zwischen einem Datensender und einem Datenempfänger in Abhängigkeit eines Transferbefehle und Steuerbefehle enthaltenden Kanalprogramms im Selektor- oder Multiplexbetrieb zur Durchführung eines Verfahrens nach Anspruch 1, wobei die Steuereinrichtung als DMA-Steuerung ausgeführt ist, die einen durch einen Sequenzer (SE) adressierten Mikroprogrammspeicher (MPS) zur Aufnahme der den Kanalbefehlen zugeordneten Mikroprogramme, eine Adresseneinheit (AU) zur Aufnahme der Datenempfänger- und der Datensenderadresse und der Adresse des Kanalbefehlwortes, eine Datenstufe (DU) zur Zwischenspeicherung der zu übertragenden Daten, einen Bytezähler (BZ) und einer Steuerregisterstufe (CR) mit einem Modusregister (GMR), einem Kanalbefehlsregister (CCR) und einem Befehlsregister (GCR) enthält, **dadurch gekennzeichnet,** daß der Sequenzer (SE) derart ausgebildet ist, daß er in Abhängigkeit vom Inhalt des Kanalbefehlsregisters (CCR) und in Abhängigkeit vom Inhalt des Modusregisters (GMR) über den Befehldecoder (MAP) die Startadresse für das dem Kanalbefehlswort zugeordnete Mikroprogramm zur Steuerung des Byte/Wort-Multiplex-Betriebs oder Block-Multiplex-Betriebs erzeugt und den jeweiligen Programmablauf für die jeweils gewählte Betriebsart steuert.

## Claims

1. Method for controlling data transfer between a transmitter (PL; MM) and a receiver (MM; PL) by means of a control device (DMA) via at least one channel, in which the control device (DMA) employs channel programs for executing the data transfer, in which the data transfer can be generally controlled in selector mode or in multiplex mode, in which the data transfer can be controlled both in byte/word multiplex mode and in block multiplex mode, characterised in that given control of the data transfer in multiplex mode, it is possible to select freely between byte/word multiplex mode and block multiplex mode, the selected multiplex mode being defined by the respective current transfer command in the channel program.

2. Method according to claim 1, characterised in that the channel operated in multiplex mode has a plurality of subchannels (UK), in that each of the subchannels (UK) can process its own channel program, and in that it is possible to select different multiplex modes for different subchannels (UK).

3. Method according to one of the preceding claims, characterised in that, at the beginning of data transfer, the mode register (GMR) and a first address register (MTPR) are loaded with the partial address of the peripheral device by a microprocessor connected to the bus, in that the command register (GCR) is subsequently loaded with the start command for a subchannel by the microprocessor (MP), in that the address of the subchannel or the device number is taken from the start command and is combined with the partial address in the address register (MTPR), the data receiver/transmitter is addressed and is requested to output an operating request, and in that the control device then assumes the waiting state, in that, after the operating request has been received from the data receiver/transmitter with output of its address, the first command of the channel program is addressed using this address and the partial address and is stored in the channel command register (CCR), in that the addresses of the data transmitter and data receiver are stored in a second and third address register (SPR) and (DPR), in that the byte counter (BZ) is loaded with the number of bytes to be transmitted, and in that the data transfer is then carried out in block multiplex mode until the byte counter is 0, or until only one byte/word is transmitted in byte/word multiplex mode.

4. Control device for data transfer via a bus between a data transmitter and a data receiver in dependence on a channel program containing transfer commands and control commands in selector or multiplex mode for carrying out a method according to Claim 1, in which the control device is designed as a DMA controller which contains a microprogram memory (MPS) addressed by a sequencer (SE) for receiving the microprograms assigned to the channel commands, an address unit (AU) for receiving the data receiver address and the data transmitter address and the address of the channel command word, a data stage (DU) for temporarily storing the data to be transmitted, a byte counter (BZ) and a control register stage (CR) with a mode register (GMR), a channel command register (CCR) and a command register (GCR), characterised in that the sequencer (SE) is designed in such a way that, depending on the contents of the channel command register (CCR) and depending on the contents of the mode register (GMR), it generates via the command decoder (MAP) the start address for the microprogram assigned to the channel command word for controlling the byte/word multiplex mode or block multiplex mode and controls the respective program execution for the mode selected in each case.

**Revendications**

1. Procédé pour commander le transfert des données entre un émetteur (PL; MM) et un récepteur (MM; PL) à l'aide d'un dispositif de commande (DMA) par l'intermédiaire d'au moins un canal, et selon lequel le dispositif de commande (DMA) utilise des programmes de canaux pour l'exécution du transfert des données, le transfert des données pouvant être commandé d'une manière générale selon le fonctionnement à sélection ou le fonctionnement multiplex, et le transfert des données pouvant être commandé aussi bien en fonctionnement multiplex par octets/mots que dans le fonctionnement multiplex par blocs, caractérisé par le fait que dans le cas de la commande du transfert des données dans le fonctionnement multiplex, on peut choisir à volonté entre le fonctionnement multiplex par octets/mots et le fonctionnement multiplex par blocs, le type de fonctionnement multiplex sélectionné étant fixé par l'instruction actuelle de transfert dans le programme de canaux.

2. Procédé suivant la revendication 1, caractérisé par le fait que le canal fonctionnant selon le fonctionnement multiplex comporte plusieurs canaux secondaires (UK), que chacun des canaux secondaires (UK) peut traiter un programme particulier de canaux et que pour différents canaux secondaires (UK), on peut sélectionner différents types de fonctionnement multiplex.

3. Procédé suivant l'une des revendications précédentes, caractérisé par le fait qu'au début du transfert des données, le registre de modes (GMR) et un premier registre d'adresses (MTPR) sont chargés avec l'adresse partielle de l'appareil périphérique, au moyen d'un microprocesseur (MP) raccordé au bus, qu'ensuite le registre d'instructions (GCR) est chargé avec l'instruction de démarrage pour un canal secondaire par le microprocesseur (MP), que l'adresse du canal secondaire ou le numéro d'appareil sont tirés de l'instruction de démarrage et sont combinés à l'adresse partielle dans le registre d'adresses (MTPR), qui adresse le récepteur/l'émetteur de données et est appelé pour la délivrance d'une demande de service et qu'ensuite, le dispositif de commande passe à l'état d'attente, qu'après l'introduction de la demande de service par le récepteur/l'émetteur de données, la première instruction du programme de canaux est adressée, moyennant la délivrance de l'adresse de ce récepteur/de cet émetteur, sur la base de l'utilisation de cette adresse et de l'adresse partielle et est mémorisée dans le registre d'instructions de canaux (CCR), que les adresses de l'émetteur de données et du récepteur de données sont mémorisées dans un second registre d'adresses (SPR) et dans un troisième registre d'adresses (DPR), que le compteur d'octets (BZ) est chargé avec le nombre des octets devant être transmis et qu'ensuite, dans le fonctionnement multiplex par blocs, le transfert de données est exécuté jusqu'à ce que le compteur d'octets indique 0, ou bien, dans le fonctionnement multiplex par octets/mots, seul un octet/mot est transmis.

4. Dispositif de commande pour le transfert des données par l'intermédiaire d'un bus entre un émetteur de données et un récepteur de données en fonction d'un programme de canaux contenant des instructions de transfert et des instructions de commande, dans le fonctionnement à sélection ou dans le fonctionnement multiplex pour la mise en oeuvre d'un procédé suivant la revendication 1, le dispositif de commande étant réalisé sous la forme d'une unité de commande (DMA), qui comporte une mémoire de microprogrammes (MPS) adressée par un séquenceur (SE) et servant à recevoir des microprogrammes associés aux instructions de canaux, une unité d'adresses (AU) servant à recevoir l'adresse du récepteur de données et l'adresse de l'émetteur de données et l'adresse du mot d'instructions de canaux, un étage de données (DU) pour la mémorisation intermédiaire des données à transmettre, un compteur d'octets (BZ) et un registre d'instructions de canaux (CCR) et un registre d'instructions (GCR), caractérisé par le fait que le séquenceur (SE) est agencé de telle sorte qu'il produit, en fonction du contenu du registre d'instructions de canaux (CCR) et en fonction du contenu du registre de modes (GMR), par l'intermédiaire du décodeur d'instructions (MAP), l'adresse de démarrage pour le microprogramme associé au pas de commande de canaux pour la commande du fonctionnement multiplex par octets/mots ou du fonctionnement multiplex par blocs, et commande l'exécution respective du programme pour le type de fonctionnement respectivement sélectionné.

EP 0 108 413 B1

FIG 1

10

FIG 2

# F I G 3

EP 0 108 413 B1

FIG4

JD

MAP

FIG5

TL1        TL2        TL3

FIG6

TE3        TE2        TE1

# FIG 7b

Byte-/Wort-Transfer durch-führen — S8

Blockende erreicht ? — S9 → **ja**

**nein**

Anderer Grund für Transferbeendigung — S11 → **ja**

**nein**

Nächsten Kanal-befehl holen — S10

**ja** ← Blockmux? — S12

**nein** (Bytemux)

Update Transfer-Para-meter in Memory — S13

Steuerbefehl ausführen — S18

Wartezustand einnehmen — S14

**nein** ← Steuerbefehl ? — S15

**ja**

Stop-Befehl — S16 → **nein**

**ja**

Jnterupt an CPU / Unterkanal beendet — S17

EP 0 108 413 B1

# FIG 7a

**Start Unterkanal von CPU** — S1

**INA Setzen** — S2

**Wartezustand des Blockmux abwarten** — S3

Wartezustand
Anforderung da? — S4  nein

ja

INA? — S5  ja → Subkanal bzw. Gerät starten

nein

**Gerätenummer holen** — S6

**Kanalbefehl holen** — S7

I

# FIG 8

FIG 7a

FIG 7b

15